# EUROPÄISCHE PATENTSCHRIFT

(11) **EP 3 069 033 B1**
(45) Veröffentlichungstag und Bekanntmachung des Hinweises auf die Patenterteilung: **04.09.2019**
(21) Anmeldenummer: 14798694.7
(22) Anmeldetag: 20.10.2014
(51) Int. Cl.: F16D 13/04, F16D 13/54, F16D 13/75, F16D 13/52, F16D 13/70

(54) **REIBUNGSKUPPLUNG**
FRICTION CLUTCH
EMBRAYAGE À FRICTION

(30) Priorität: 13.11.2013 DE 102013223093
(43) Veröffentlichungstag der Anmeldung: 21.09.2016
(73) Patentinhaber: Schaeffler Technologies AG & Co. KG, 91074 Herzogenaurach (DE)
(72) Erfinder: FINKENZELLER, Marc, 77723 Gengenbach (DE)
(86) Internationale Anmeldenummer: PCT/DE2014/200578
(87) Internationale Veröffentlichungsnummer: WO 2015/070859

(56) Entgegenhaltungen:
- EP-A1- 1 980 766
- WO-A1-2008/058508
- DE-A1-102009 049 253
- GB-A- 2 207 965
- US-A- 6 079 537
- US-B1- 6 189 667

## Beschreibung

Die Erfindung betrifft eine nasse Lamellenkupplung gemäß dem Oberbegriff des Patentanspruchs 1, mit deren Hilfe eine Antriebswelle eines Kraftfahrzeugmotors mit mindestens einer Getriebeeingangswelle eines Kraftfahrzeuggetriebes gekuppelt werden kann.

Aus der DE 10 2010 048 827 A1 ist eine nasse Lamellenkupplung gemäß dem Oberbegriff des Patentanspruchs 1 zum Kuppeln einer Antriebswelle eines Kraftfahrzeugmotors mit einer Getriebeeingangswelle eines Kraftfahrzeuggetriebes bekannt, bei der eine Vorkupplung mit einem Rampenmechanismus vorgesehen ist, um eine erhöhte Anpresskraft im geschlossenen Zustand der Reibungskupplung zu erreichen.

Aus der US 6 189 667 B1 ist eine trockene Reibungskupplung mit einem drehfest mit einer angetriebenen Schwungmasse verbindbaren Gehäuse, und einer darin angeordneten, von einer sich am Gehäuse abstützenden Anpressfeder beaufschlagbaren Anpressplatte zur Anpressung einer mit Reibbelägen versehenen Kupplungsscheibe auf die Schwungmasse bekannt, wobei die Anpressfeder beim Einkuppeln eine sich verändernde Anpresskraft auf die Anpressplatte ausübt, und wobei eine auf die Anpressplatte einwirkende Einrichtung vorgesehen ist, über die die Anpresskraft der Anpressplatte im Wesentlichen proportional zur Kraft der Anpressfeder verändert wird.

Es besteht ein ständiges Bedürfnis mit geringem konstruktivem Aufwand eine nasse Reibungskupplung sicher schließen zu können.

Es ist die Aufgabe der Erfindung Maßnahmen aufzuzeigen, die ein sicheres Schließen einer nassen Reibungskupplung mit geringem konstruktivem Aufwand ermöglichen.

Die Lösung der Aufgabe erfolgt erfindungsgemäß durch eine als nasse Lamellenkupplung ausgebildete Reibungskupplung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine nasse Lamellenkupplung zum Kuppeln einer Antriebswelle eines Kraftfahrzeugmotors mit mindestens einer Getriebeeingangswelle eines Kraftfahrzeuggetriebes, mit einem mit der Antriebswelle koppelbaren, als Eingangslamellenträger ausgebildeten Eingangsteil zum Einleiten eines Drehmoments, einem mit der Getriebeeingangswelle koppelbaren, als Ausgangslamellenträger ausgebildeten Ausgangsteil zum Ausleiten eines Drehmoments, mindestens einem zwischen dem Eingangsteil und dem Ausgangsteil vorgesehenen verschleißbehafteten Reibbelag zum reibschlüssigen Übertragen eines Drehmoments zwischen dem Eingangsteil und dem Ausgangsteil, einer als Blattfeder ausgestalteten Rückstellfeder zur Positionierung des Ausgangsgangsteils relativ zum Eingangsteil in eine definierte Ausgangslage und einem Betätigungselement zum Verlagern des Ausgangsteils relativ zum Eingangsteil aus der Ausgangslage heraus, wobei zumindest ein Teil des von der Reibungskupplung übertragenen Drehmoments über die Rückstellfeder übertragbar ist, wobei die Rückstellfeder zwischen einer Drehmomenteinleitungsstelle und einer Drehmomentausleitungsstelle im Wesentlichen in tangentialer Richtung verläuft und um einen Anstellwinkel zu einer Radialebene der Reibungskupplung schräg verläuft, wobei die Rückstellfeder im geschlossenen Zustand der Reibungskupplung im verschlissenen Zustand des mindestens einen Reibbelags eine höhere Anpresskraft zwischen dem Eingangsteil und dem Ausgangsteil als im unverschlissenen Zustand des mindestens einen Reibbelags zulässt.

Die als Blattfeder ausgestaltete Rückstellfeder wird nicht nur zum Anfahren einer definierten Relativlage des Eingangsteils zum Ausgangsteil in der Ausgangslage, sondern auch zum Übertragen zumindest eines Teils des in die Reibungskupplung eingeleiteten Drehmoments, vorzugsweise des gesamten die Reibungskupplung eingeleiteten Drehmoments, verwendet. Hierbei wird die Erkenntnis ausgenutzt, dass sich über den Verschleißbereich der Reibbeläge der Hubweg des Ausgangsteils relativ zum Eingangsteil vergrößert und sich dadurch der Anstellwinkel der Rückstellfeder zur Radialebene verändert. Durch den sich vergrößernden oder verkleinernden Anstellwinkel ändern sich in der Art eines schräg betätigten Kniehebels die Kraftverhältnisse an der Rückstellfeder, so dass sich der in Längsrichtung der Rückstellfeder verlaufende Kraftanteil verändert. Entsprechend ändert sich an dem in Kraftflussrichtung ausgangsseitigen Ende der Rückstellfeder der in axialer Richtung der Reibungskupplung weisende Kraftanteil, so dass sich in Abhängigkeit des Hubwegs, der mit dem Verschleißzustand der Reibbeläge korrespondiert, von der Rückstellfeder eine entsprechende sich ändernde Axialkraft aufgeprägt werden kann, die je nach Anwendungsfall mit der über das Betätigungselement eingeleiteten Betätigungskraft zur Anpresskraft addiert oder subtrahiert wird, um im geschlossenen Zustand der Reibungskupplung eine verschleißbedingte nachlassende Anpresskraft mindestens auszugleichen. Dadurch ist es möglich, dass im geschlossenen Zustand der Reibungskupplung bei verschlissenen Reibbelägen die an dem Reibbelag wirkende Anpresskraft nicht absinkt sondern sich sogar erhöhen kann, so dass sogar ein sich im Verschleiß etwas reduzierender Reibwert kompensiert werden kann. Dadurch kann auch bei verschlissenen Reibbelägen ein sicheres Schließen der Reibungskupplung gewährleistet werden. Hierzu kann die sowieso vorgesehene Rückstellfeder genutzt werden, ohne hierzu weitere Kraftübersetzungseinrichtungen, wie beispielsweise Rampensysteme, vorzusehen, so dass ein einfacher konstruktiver Aufbau der Reibungskupplung mit wenigen Bauteilkomponenten erreicht werden kann. Durch die Verwendung der schräg zur Radialebene tangential verlaufenden Rückstellfeder auch zur Drehmomentübertragung kann eine im Verschleiß der Reibbeläge nachlassende Anpresskraft durch eine Änderung der Kraftrichtung des über die Rückstellfeder eingeleiteten Drehmoments zumindest kompensiert werden, so dass ein sicheres Schließen einer Reibungskupplung mit geringem konstruktivem Aufwand ermöglicht ist.

Die nasse Reibungskupplung ist als Lamellenkupplung mit mehreren hintereinander vorgesehenen Reibpaarungen zwischen dem Eingangsteil und dem Ausgangsteil ausgestaltet. Vorzugsweise kann mit Hilfe eines Kühlmittels, insbesondere Öl, Reibungswärme aus der Reibungskupplung abgeführt werden, so dass die Reibungskupplung insbesondere als nasse Lamellenkupplung ausgestaltet sein kann. Das Eingangsteil und/oder das Ausgangsteil können einen Lamellenträger aufweisen, an dem in axialer Richtung verschiebbare Lamellen geführt sind. Die jeweilige Lamelle kann mit Reibbelägen versehen sein oder als Stahllamelle ausgeführt sein. Die Reibungskupplung kann in der Ausgangslage, wenn über das Betätigungselement keine Betätigungskraft eingeleitet wird, geöffnet ("normally open) oder geschlossen ("normally closed") sein. Je nachdem, ob die Rückstellfeder im Kraftfluss vor oder nach dem mindestens einen Reibbelag angeordnet ist und die Reibungskupplung als normally closed oder normally open ausgestaltet ist, kann die Rückstellfeder im Zugbetrieb des mit der Reibungskupplung gekoppelten Kraftfahrzeugmotors zur Drehmomentübertragung auf Druck oder auf Zug belastet werden. Wenn die Rückstellfeder zur Drehmomentübertragung auf Druck belastet wird, kann die als Blattfeder ausgestaltete Rückstellfeder bis zu einer unterhalb einer Knickkraft liegenden und in Längsrichtung der Blattfeder verlaufenden Kraft auf Biegung beansprucht werden. Insbesondere sind mehrere Rückstellfedern vorgesehen, die insbesondere in Umfangsrichtung vorzugsweise auf einem gemeinsamen Nennradius gleichmäßig verteilt sind, so dass sich die an der einzelnen Rückstellfeder angreifenden Kräfte reduzieren können. Die Rückstellfeder verläuft insbesondere im Wesentlichen tangential und kann durch ihren Anstellwinkel relativ zur Radialebene eine axiale Strecke überbrücken. Es ist auch möglich, dass die Rückstellfeder mit einem Anteil in radialer Richtung verläuft, wobei insbesondere der Anteil der Längserstreckung der Rückstellfeder in tangentialer Richtung deutlich größer als in radialer Richtung ist. Die Rückstellfeder weist insbesondere mehrere übereinander angeordnete Federlagen auf, die insbesondere jeweils aus einem Stahlblech hergestellt sind. Mehrere Federlagen können beispielsweise miteinander vernietet sein. Das Betätigungselement kann als Hebelelement, insbesondere eine um einen in Umfangsrichtung verlaufenden Schwenkpunkt verschwenkbare, vorzugsweise als Tellerfeder ausgestaltete, Hebelfeder ausgestaltet sein, so dass über den Hebeleffekt eine Übersetzung einer an dem Betätigungselement angreifenden Betätigungskraft erreicht werden kann. Das Betätigungselement kann auch als im Wesentlichen rein axial verschobener Betätigungstopf ausgestaltet sein, der abgesehen von einer eigenen elastischen Verformung im Wesentlichen keine Kraftübersetzung für die an dem Betätigungselement angreifende Betätigungskraft bereitstellt.

Vorzugsweise stellt die Rückstellfeder bei der Drehmomentübertragung durch den tangentialen Verlauf der Rückstellfeder eine sich über den Verschleißbereich des mindestens einen Reibbelags verändernde Kraftübersetzung in axialer Richtung bereit, wobei die Kraftübersetzung eine Änderung einer sich über den Verschleißbereich des mindestens einen Reibbelags verändernde Rückstellkraft in axialer Richtung in die Ausgangslage ausgleicht oder überkompensiert. Die als Blattfeder ausgestaltete Rückstellfeder kann bei einem sich im Verschleiß der Reibbeläge verändernden Hubweg seinen Anstellwinkel außerhalb der Ausgangslage immer stärker verändern, wodurch sich auch das Übersetzungsverhältnis zwischen dem eingangsseitig an der Rückstellfeder angreifenden Drehmoment und dem ausgangsseitig in axialer Richtung wirkenden Axialkraft ändert. Die sich in Abhängigkeit vom Verschleiß der Reibbeläge ändernde Kraftübersetzung der Rückstellfeder kann derart gewählt und konstruktiv ausgestaltet sein, dass ein verschleißbedingtes Nachlassen der Anpresskraft an den Reibbelägen im geschlossenen Zustand der Reibungskupplung zumindest ausgeglichen oder überkompensiert werden kann. Hierbei kann insbesondere auch ein gegebenenfalls stattfindendes Nachlassen der an dem Betätigungselement angreifenden Betätigungskraft bei ansteigendem Hubweg des Betätigungselements kompensiert werden.

In einer bevorzugten Ausführungsform ist ein axial feststehendes Kupplungsteil, insbesondere Kupplungsdeckel, vorgesehen, wobei die Rückstellfeder mit dem Kupplungsteil und mit dem Betätigungselement direkt oder indirekt befestigt ist. Die Rückstellfeder kann leicht mit dem Kupplungsteil, beispielsweise durch Verschrauben oder Vernieten, befestigt werden. Über das Kupplungsteil kann insbesondere zumindest ein Teil des von der Reibungskupplung zu übertragenden Drehmoments an die Rückstellstellfeder übertragen werden, wobei die Rückstellstellfeder dieses Drehmoment wiederum an das von dem Betätigungselement verlagerte Teil direkt oder indirekt übertragen kann. Die Rückstellfeder kann dadurch leicht in den Drehmomentfluss der Reibungskupplung integriert werden.

Vorzugsweise ist der Anstellwinkel im geschlossenen Zustand der Reibungskupplung im verschlissenen Zustand des mindestens einen Reibbelags größer als im unverschlissenen Zustand des mindestens einen Reibbelags. Insbesondere wenn die Reibungskupplung als normally open ausgestaltet ist, kann sich dadurch die Anpresskraft im verschlissenen Zustand durch den über die Rückstellfeder eingeleiteten Teil des Drehmoments erhöhen.

Insbesondere ist zwischen dem Betätigungselement und dem Ausgangsteil eine von dem Betätigungselement axial verlagerbare Anpressplatte zum Verpressen des Ausgangsteils zwischen der Anpressplatte und dem Eingangsteil vorgesehen, wobei die Rückstellfeder mit der Anpressplatte verbunden ist. Über die Anpressplatte kann die Rückstellkraft der Rückstellfeder auf das Betätigungselement wirken. Zusätzlich kann über die Anpressplatte das über die Rückstellfeder eingeleitete Drehmoment übertragen werden, so dass insbesondere die Rückstellfeder über die Anpressplatte eine sich im Verschleiß erhöhende Axialkraft einleiten kann, um im Verschleiß die Anpresskraft zu erhöhen.

In einer bevorzugten Ausführungsform ist eine mit der Getriebeeingangswelle verbindbare Kupplungsscheibe vorgesehen, wobei das Ausgangsteil relativ zur Kupplungsscheibe axial verlagerbar ist, wobei die Rückstellfeder mit dem Ausgangsteil und der Kupplungsscheibe verbunden ist. Die vorzugsweise mindestens einen Reibbelag aufweisende Kupplungsscheibe ist insbesondere über eine Steckverzahnung drehfest mit der Getriebeeingangswelle verbindbar. Die Kupplungsscheibe kann im geschlossenen Zustand der Reibungskupplung insbesondere zwischen dem Eingangsteil und dem Ausgangsteil reibschlüssig verpresst werden. Die Kupplungsscheibe kann dadurch im Wesentlichen die Funktion einer Reiblamelle des Ausgangsteils wahrnehmen, wobei die Kupplungsscheibe relativ zum Ausgangsteil axial verlagerbar ist. In dieser Ausführungsform ist die Rückstellfeder zusätzlich oder alternativ zu einer im Drehmomentfluss vor dem Reibbelag angeordneten Rückstellfeder im Drehmomentfluss hinter dem Reibbelag angeordnet. Dies ermöglicht es die Rückstellfeder im Zugbetrieb des Kraftfahrzeugmotors auf Zug zu beanspruchen, so dass auch bei höheren in Längsrichtung der Rückstellfeder wirkenden Kräften ein Knicken nicht zu befürchten ist. Eine Biegebeanspruchung der als Blattfeder ausgestalteten Rückstellfeder im Zugbetrieb ist dadurch vermieden. Die Rückstellfeder ist dadurch geringeren Belastungen ausgesetzt. Insbesondere ist der Anstellwinkel im geschlossenen Zustand der Reibungskupplung im verschlissenen Zustand des mindestens einen Reibbelags kleiner als im unverschlissenen Zustand des mindestens einen Reibbelags.

Besonders bevorzugt greift das Betätigungselement an einer von der Kupplungsscheibe wegweisenden Axialseite an dem Ausgangsteil an. Die Rückstellfeder ist dadurch leicht während der Montage zugänglich. Das Ausgangsteil ist dadurch zwischen dem Betätigungselement und der Rückstellfeder positioniert. Die Rückstellfeder kann dadurch bei einer Verlagerung des Ausgangsteils in die Ausgangslage mittelbar über das Ausgangsteil auch das Betätigungselement in eine zur Ausgangslage des Ausgangsteils korrespondierende Lage mit einer Rückstellkraft bewegen.

Insbesondere ist in der Ausgangslage die Reibungskupplung geöffnet. Die Reibungskupplung ist dadurch als normally open ausgestaltet, so dass bei einem Bauteilversagen die Reibungskupplung öffnet und kein Drehmoment überträgt. Dadurch ist ein guter fail-safe-Betrieb erreicht. Insbesondere kann vermieden werden, dass bei einer Doppelkupplung mit zwei derartiger Reibungskupplungen durch ein Bauteilversagen beide Reibungskupplungen der Doppelkupplung geschlossen bleiben.

In einer bevorzugten Ausführungsform ist ein axial feststehendes Kupplungsteil, insbesondere Kupplungsdeckel, vorgesehen, wobei das Eingangsteil von dem Betätigungselement relativ zu dem Kupplungsteil axial bewegbar ist, wobei die Rückstellfeder mit dem Kupplungsteil und dem Eingangsteil verbunden ist, wobei insbesondere die Rückstellfeder an einer von dem Ausgangsteil wegweisenden Axialseite des Kupplungsteils mit dem Kupplungsteil verbunden ist. Die Reibungskupplung ist insbesondere als normally closed ausgestaltet. Die Rückstellfeder kann leicht mit dem Kupplungsteil, beispielsweise durch Verschrauben oder Vernieten, befestigt werden. Die Rückstellfeder kann dadurch leicht in den Drehmomentfluss der Reibungskupplung integriert werden. Insbesondere kann die Rückstellfeder im Wesentlichen in einem äußeren und leicht zugänglichen Bereich der Reibungskupplung vorgesehen sein, wodurch die Montage erleichtert ist. Insbesondere ist der Anstellwinkel im geschlossenen Zustand der Reibungskupplung im verschlissenen Zustand des mindestens einen Reibbelags größer als im unverschlissenen Zustand des mindestens einen Reibbelags.

Vorzugsweise ist das Eingangsteil zum Kupplungsteil begrenzt verdrehbar. Dadurch kann ein Versatz des Eingangsteils zum Kupplungsteil in Umfangsrichtung bei der Änderung des Anstellwinkels der Rückstellfeder ausgeglichen werden.

Die Erfindung betrifft ferner eine Doppelkupplung zum Kuppeln einer Antriebswelle eines Kraftfahrzeugmotors mit einer ersten Getriebeeingangswelle und/oder einer zweiten Getriebeeingangswelle mit einer ersten nassen Lamellenkupplung die wie vorstehend beschrieben aus- und weitergebildet sein kann, zum Kuppeln der Antriebswelle mit der ersten Getriebeeingangswelle und einer zweiten nassen Lamellenkupplung die wie vorstehend beschrieben aus- und weitergebildet sein kann, zum Kuppeln der Antriebswelle mit der zweiten Getriebeeingangswelle. Durch die Verwendung der schräg zur Radialebene tangential verlaufenden Rückstellfeder der jeweiligen Reibungskupplung auch zur Drehmomentübertragung kann eine im Verschleiß der Reibbeläge nachlassende Anpresskraft durch eine Änderung der Kraftrichtung des über die Rückstellfeder eingeleiteten Drehmoments zumindest kompensiert werden, so dass ein sicheres Schließen der Doppelkupplung mit geringem konstruktivem Aufwand ermöglicht ist. Vorzugsweise sind die erste Reibungskupplung und die zweite Reibungskupplung ineinander geschachtelt, so dass sich die erste Reibungskupplung und die zweite Reibungskupplung in radialer Richtung betrachtet, insbesondere mit dem Eingangsteil und/oder dem Ausgangsteil, zumindest teilweise überlappen. Dies führt zu einem besonders kompakten und bauraumsparenden Aufbau der Doppelkupplung.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Prinzipdarstellung einer Reibungskupplung in einer ersten Ausführungsform,
Fig. 2: eine schematische Prinzipdarstellung einer Reibungskupplung in einer zweiten Ausführungsform und
Fig. 3: eine schematische Prinzipdarstellung einer Reibungskupplung in einer dritten Ausführungsform.

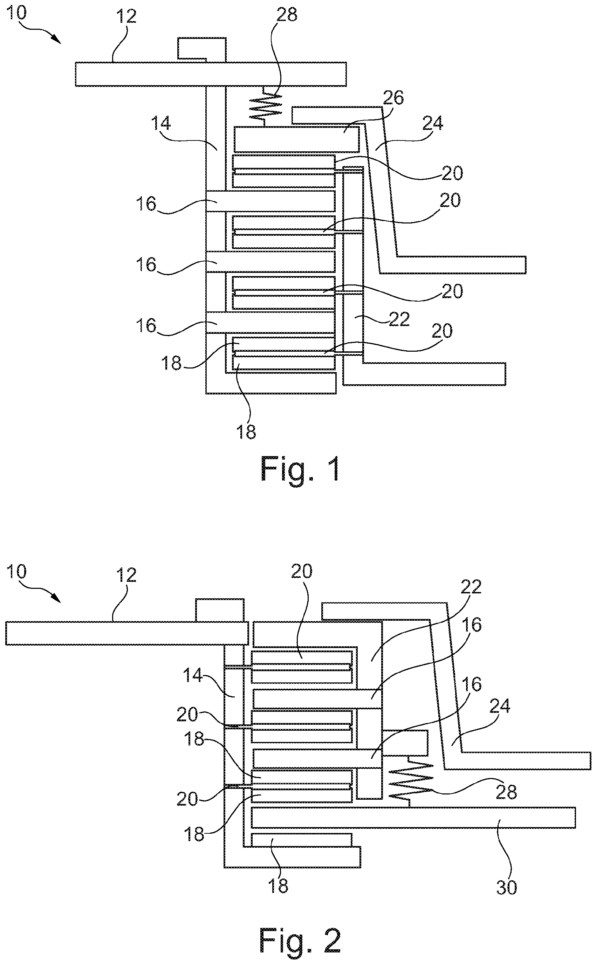

Die in Fig. 1 dargestellte Reibungskupplung 10 weist ein als Kupplungsdeckel ausgestaltetes Kupplungsteil 12 auf, das mitdrehend aber axial feststehend ausgestaltet ist. Mit dem Kupplungsteil 12 ist ein als Lamellenträger ausgestaltetes Eingangsteil 14 gekoppelt, das insbesondere mit dem Kupplungsteil 14in axialer Richtung unbeweglich befestigt ist. Das Eingangsteil 14 weist mehrere in axialer Richtung verschiebbare Stahllamellen 16 auf, zwischen denen beidseitig mit einem verschleißbehafteten Reibbelag 18 versehene Reiblamellen 20 eines als Lamellenträger ausgestalteten Ausgangsteils 22 angeordnet sind. Um im geschlossenen Zustand der Reibungskupplung 10 einen Drehmomentfluss zwischen dem Eingangsteil 14 und dem Ausgangsteil 22 herzustellen, können die Stahllamellen 16 und die Reiblamellen 20 mit Hilfe einer von einem als Betätigungstopf ausgestalteten Betätigungselement 24 axial verlagerbaren Anpressplatte 26 reibschlüssig verpresst werden.

Bei der in Fig. 1 dargestellten Ausführungsform ist mit der Anpressplatte 26 und dem Kupplungsteil 12 eine als Blattfeder ausgestaltete Rückstellfeder 28 fest verbunden. Die Rückstellfeder 28 kann bei einem Schließen der als normally open ausgestalteten Reibungskupplung 10 eine Rückstellkraft aufbauen, um bei einem Nachlassen einer auf das Betätigungselement 24 wirkenden Betätigungskraft die Anpressplatte 26 zu lüften, wodurch sich die Reibungskupplung 10 öffnet und das Betätigungselement 24 in eine dem geöffneten Zustand der Reibungskupplung 10 entsprechenden Ausgangslage zurückbewegt wird. Bei einem auftretenden Verschleiß der Reibbeläge 18 erhöht sich zum Schließen der Reibungskupplung 10 der Hubweg der Anpressplatte 26, wodurch die Rückstellfeder 28 stärker ausgelenkt und eine stärkere Rückstellkraft bereitstellt. Allerdings wird gleichzeitig ein Teil des über das Kupplungsteil 12 eingeleiteten Drehmoments eines Kraftfahrzeugmotors über die Rückstellfeder 28 an die Anpressplatte 26 übertragen. Die als Blattfeder ausgestaltete Rückstellfeder 28 wird hierbei auf Druck beansprucht ohne hierbei zu knicken. Durch den im Verschleiß erhöhten Hubweg der Anpressplatte 26 stellt sich bei der Rückstellfeder ein sich gegenüber einer Radialebene erhöhter Anstellwinkel der Längserstreckung der Rückstellfeder 28 ein, wodurch ein erhöhter Kraftanteil des über die Rückstellfeder 28 übertragenen Drehmoments in axialer Richtung zum Verpressen der Reibbeläge 18 im geschlossenen Zustand der Reibungskupplung 10 auftritt. Dadurch wird die sich erhöhende Rückstellkraft der Rückstellfeder 28 mehr als ausgeglichen. Zumindest an der Anpressplatte 26 ist im verschlissenen Zustand der Reibbeläge 18 die im geschlossenen Zustand der Reibungskupplung 10 auf die Reibbeläge 18 wirkende Anpresskraft sogar höher als im unverschlissenen Zustand der Reibbeläge 18.

Bei der in Fig. 2 dargestellten Ausführungsform der als normally open ausgestalteten Reibungskupplung 10 ist im Vergleich zu der in Fig. 1 dargestellten Ausführungsform der Reibungskupplung 10 zusätzlich eine Kupplungsscheibe 30 vorgesehen, die relativ zum Ausgangsteil 22 axial verlagerbar ist. Ferner ist es das Ausgangsteil 22, das die Stahllamellen 16 aufweist, während das Eingangsteil 14 die Reiblamellen 20 aufweist. Die Kupplungsscheibe 30 ersetzt eine Stahllamelle 16, die anderenfalls von dem Ausgangsteil 22 ausgebildet worden wäre. Das Betätigungselement 24 greift ohne separate Anpressplatte direkt an dem Ausgangsteil 22 an. In der dargestellten Ausführungsform ist die Rückstellfeder 28 mit dem Ausgangsteil 22 und der Kupplungsscheibe 30 verbunden. Dies ermöglicht es die Rückstellfeder 28 im Zugbetrieb auf Zug zu belasten, wodurch das Risiko eines Knickens der Rückstellfeder 28 reduziert ist.

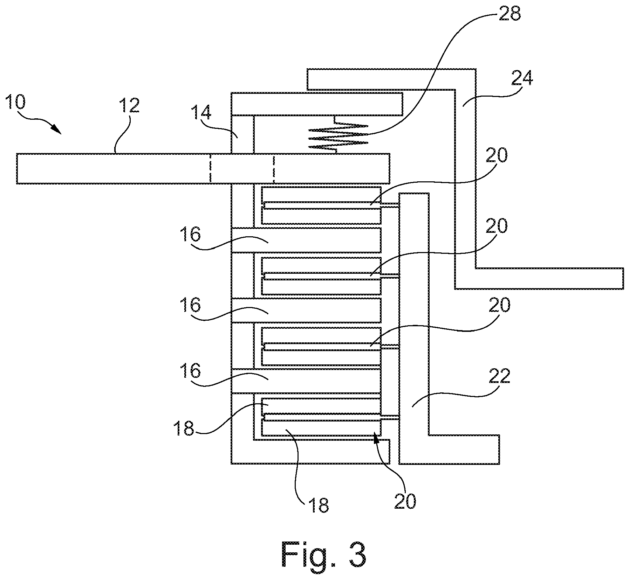

Bei der in Fig. 3 dargestellten Ausführungsform der als normally closed ausgestalteten Reibungskupplung 10 ist im Vergleich zu der in Fig. 1 dargestellten Ausführungsform der Reibungskupplung 10 die Rückstellfeder 28 mit dem Kupplungsteil 12 und dem relativ zum Kupplungsteil 12 axial verlagerbaren Eingangsteil 14 verbunden. Das Betätigungselement 24 greift ohne separate Anpressplatte direkt an dem Eingangsteil 14 an. Das Eingangsteil 14 ist zum Kupplungsteil 12 begrenzt verdrehbar ausgeführt, um eine Relativdrehung des Eingangsteils 14 relativ zum Kupplungsteil 12 bei einer Änderung des Anstellwinkels der Rückstellfeder 28 über den Hubweg des Eingangsteils 14 zu ermöglichen. In der dargestellten Ausführungsform kann die Rückstellfeder 28 im Zugbetrieb auf Druck beansprucht werden.

### Bezugszeichenliste

- 10: Reibungskupplung
- 12: Kupplungsteil
- 14: Eingangsteil
- 16: Stahllamelle
- 18: Reibbelag
- 20: Reiblamelle
- 22: Ausgangsteil
- 24: Betätigungselement
- 26: Anpressplatte
- 28: Rückstellfeder
- 30: Kupplungsscheibe

## Patentansprüche

1. Nasse Lamellenkupplung zum Kuppeln einer Antriebswelle eines Kraftfahrzeugmotors mit mindestens einer Getriebeeingangswelle, mit
einem mit der Antriebswelle koppelbaren, als Eingangslamellenträger ausgebildeten Eingangsteil (14) zum Einleiten eines Drehmoments,
einem mit der Getriebeeingangswelle koppelbaren, als Ausgangslamellenträger ausgebildeten Ausgangsteil (22) zum Ausleiten eines Drehmoments,
mindestens einem zwischen dem Eingangsteil (14) und dem Ausgangsteil (22) vorgesehenen verschleißbehafteten Reibbelag (18) zum reibschlüssigen Übertragen eines Drehmoments zwischen dem Eingangsteil (14) und dem Ausgangsteil (22), und
einem Betätigungselement (24) zum Verlagern des Ausgangsteils (22) relativ zum Eingangsteil (14) aus der Ausgangslage heraus,
**dadurch gekennzeichnet, dass** eine als Blattfeder ausgestaltete Rückstellfeder (28) zur Positionierung des Ausgangsteils (22) relativ zum Eingangsteil (14) in einer definierten Ausgangslage vorgesehen ist,
wobei zumindest ein Teil des von der Reibungskupplung (10) übertragenen Drehmoments über die Rückstellfeder (28) übertragbar ist, wobei die Rückstellfeder (28) zwischen einer Drehmomenteinleitungsstelle und einer Drehmomentausleitungsstelle im Wesentlichen in tangentialer Richtung verläuft und um einen Anstellwinkel zu einer Radialebene der Reibungskupplung (10) schräg verläuft,
wobei die Rückstellfeder (28) im geschlossenen Zustand der Reibungskupplung (10) im verschlissenen Zustand des mindestens einen Reibbelags (18) eine höhere Anpresskraft zwischen dem Eingangsteil (14) und dem Ausgangsteil (22) als im unverschlissenen Zustand des mindestens einen Reibbelags (18) zulässt.

2. Nasse Lamellenkupplung nach Anspruch 1 **dadurch gekennzeichnet, dass** die Rückstellfeder (28) bei der Drehmomentübertragung durch den tangentialen Verlauf der Rückstellfeder (28) eine sich über den Verschleißbereich des mindestens einen Reibbelags (18) verändernde Kraftübersetzung in axialer Richtung bereitstellt, wobei die Kraftübersetzung eine Änderung einer sich über den Verschleißbereich des mindestens einen Reibbelags (18) verändernde Rückstellkraft in axialer Richtung in die Ausgangslage ausgleicht oder überkompensiert.

3. Nasse Lamellenkupplung nach Anspruch 1 oder 2 **dadurch gekennzeichnet, dass** ein axial feststehendes Kupplungsteil (12), insbesondere Kupplungsdeckel, vorgesehen ist, wobei die Rückstellfeder (28) mit dem Kupplungsteil (12) und mit dem Betätigungselement (24) direkt oder indirekt befestigt ist.

4. Nasse Lamellenkupplung nach Anspruch 3 **dadurch gekennzeichnet, dass** zwischen dem Betätigungselement (24) und dem Ausgangsteil (22) eine von dem Betätigungselement (24) axial verlagerbare Anpressplatte (26) zum Verpressen des Ausgangsteils (22) zwischen der Anpressplatte (26) und dem Eingangsteil (14) vorgesehen ist, wobei die Rückstellfeder (28) mit der Anpressplatte (26) verbunden ist.

5. Nasse Lamellenkupplung nach einem der Ansprüche 1 bis 4 **dadurch gekennzeichnet, dass** eine mit der Getriebeeingangswelle verbindbare Kupplungsscheibe (30) vorgesehen ist, wobei das Ausgangsteil (22) relativ zur Kupplungsscheibe (30) axial verlagerbar ist, wobei die Rückstellfeder (28) mit dem Ausgangsteil (22) und der Kupplungsscheibe (30) verbunden ist.

6. Nasse Lamellenkupplung nach Anspruch 5 **dadurch gekennzeichnet, dass** das Betätigungselement (24) an einer von der Kupplungsscheibe (30) wegweisenden Axialseite an dem Ausgangsteil (22) angreift.

7. Nasse Lamellenkupplung nach einem der Ansprüche 1 bis 6 **dadurch gekennzeichnet, dass** in der Ausgangslage die Reibungskupplung (10) geöffnet ist.

8. Nasse Lamellenkupplung nach Anspruch 1 oder 2 **dadurch gekennzeichnet, dass** ein axial feststehendes Kupplungsteil (12), insbesondere Kupplungsdeckel, vorgesehen ist, wobei das Eingangsteil (14) von dem Betätigungselement (24) relativ zu dem Kupplungsteil (12) axial bewegbar ist, wobei die Rückstellfeder (28) mit dem Kupplungsteil (12) und dem Eingangsteil (14) verbunden ist, wobei insbesondere die Rückstellfeder (28) an einer von dem Ausgangsteil (22) wegweisenden Axialseite des Kupplungsteils (12) mit dem Kupplungsteil (12) verbunden ist.

9. Nasse Lamellenkupplung nach Anspruch 8 **dadurch gekennzeichnet, dass** das Eingangsteil (14) zum Kupplungsteil (12) begrenzt verdrehbar ist.

10. Doppelkupplung zum Kuppeln einer Antriebswelle eines Kraftfahrzeugmotors mit einer ersten Getriebeeingangswelle und/oder einer zweiten Getriebeeingangswelle mit einer ersten nassen Lamellenkupplung nach einem der Ansprüche 1 bis 9 zum Kuppeln der Antriebswelle mit der ersten Getriebeeingangswelle und einer zweiten nassen Lamellenkupplung nach einem der Ansprüche 1 bis 9 zum Kuppeln der Antriebswelle mit der zweiten Getriebeeingangswelle.

## Claims

1. Wet multiple disc clutch for coupling a drive shaft of a motor vehicle engine to at least one transmission input shaft, having
an input part (14) for the introduction of a torque, which input part (14) can be coupled to the drive shaft and is configured as an input multiple disc carrier,
an output part (22) for the output of a torque, which output part (22) can be coupled to the transmission input shaft and is configured as an output multiple disc carrier,
at least one wearing friction lining (18) which is provided between the input part (14) and the output part (22) for the frictionally locking transmission of a torque between the input part (14) and the output part (22), and
an actuating element (24) for moving the output part (22) relative to the input part (14) out of the starting position,
**characterized in that** a restoring spring (28) which is configured as a leaf spring is provided for positioning the output part (22) relative to the input part (14) in a defined starting position,
it being possible for at least part of the torque which is transmitted by the friction clutch (10) to be transmitted via the restoring spring (28), the restoring spring (28) running substantially in the tangential direction between a torque introduction point and a torque output point and running obliquely by an angle of attack with respect to a radial plane of the friction clutch (10),
the restoring spring (28) permitting a higher pressure force between the input part (14) and the output part (22) in the closed state of the friction clutch (10) in the worn state of the at least one friction lining (18) than in the unworn state of the at least one friction lining (18).

2. Wet multiple disc clutch according to Claim 1, **characterized in that**, in the case of the transmission of torque, the restoring spring (28) provides a transmission of force in the axial direction which changes over the wear range of the at least one friction lining (18) as a result of the tangential course of the restoring spring (28), the transmission of force compensating or overcompensating for a change in a restoring force in the axial direction into the starting position, which restoring force changes over the wear range of the at least one friction lining (18).

3. Wet multiple disc clutch according to Claim 1 or 2, **characterized in that** an axially fixed clutch part (12), in particular a clutch cover, is provided, the restoring spring (28) being fastened directly or indirectly to the clutch part (12) and to the actuating element (24).

4. Wet multiple disc clutch according to Claim 3, **characterized in that** a pressure plate (26) which can be moved axially by the actuating element (24) is provided between the actuating element (24) and the output part (22) in order to press the output part (22) between the pressure plate (26) and the input part (14), the restoring spring (28) being connected to the pressure plate (26).

5. Wet multiple disc clutch according to one of Claims 1 to 4, **characterized in that** a clutch disc (30) which can be connected to the transmission input shaft is provided, it being possible for the output part (22) to be moved axially relative to the clutch disc (30), the restoring spring (28) being connected to the output part (22) and the clutch disc (30).

6. Wet multiple disc clutch according to Claim 5, **characterized in that** the actuating element (24) acts on the output part (22) on an axial side which points away from the clutch disc (30).

7. Wet multiple disc clutch according to one of Claims 1 to 6, **characterized in that** the friction clutch (10) is open in the starting position.

8. Wet multiple disc clutch according to Claim 1 or 2, **characterized in that** an axially fixed clutch part (12), in particular a clutch cover, is provided, it being possible for the input part (14) to be moved axially by the actuating element (24) relative to the clutch part (12), the restoring spring (28) being connected to the clutch part (12) and the input part (14), the restoring spring (28) being connected, in particular, to the clutch part (12) on an axial side of the clutch part (12), which axial side points away from the output part (22).

9. Wet multiple disc clutch according to Claim 8, **characterized in that** the input part (14) can be rotated to a limited extent with respect to the clutch part (12).

10. Double clutch for coupling a drive shaft of a motor vehicle engine to a first transmission input shaft and/or a second transmission input shaft having a first wet multiple disc clutch according to one of Claims 1 to 9 for coupling the drive shaft to the first transmission input shaft and a second wet multiple disc clutch according to one of Claims 1 to 9 for coupling the drive shaft to the second transmission input shaft.

## Revendications

1. Embrayage multidisque humide pour l'accouplement d'un arbre de commande d'un moteur de véhicule automobile avec au moins un arbre d'entrée de boîte de vitesses, avec
une partie d'entrée (14) sous forme de porte-disques d'entrée, pouvant être couplée à l'arbre de commande pour l'introduction d'un couple de rotation,
une partie de sortie (22) sous forme de porte-disques de sortie, pouvant être couplée à l'arbre d'entrée de boîte de vitesses, pour la sortie d'un couple de rotation,
au moins une garniture de friction soumise à l'usure (18) prévue entre la partie d'entrée (14) et la partie de sortie (22) pour la transmission par friction d'un couple de rotation entre la partie d'entrée (14) et la partie de sortie (22), et
un élément d'actionnement (24) pour déplacer la partie de sortie (22) par rapport à la partie d'entrée (14) à partir de la position initiale,
**caractérisé en ce qu'**il est prévu un ressort de rappel (28) sous forme de ressort à lame pour le positionnement de la partie de sortie (22) par rapport à la partie d'entrée (14) dans une position initiale définie,
dans lequel au moins une partie du couple de rotation transmis par l'embrayage à friction (10) peut être transmise par le ressort de rappel (28), dans lequel le ressort de rappel (28) s'étend essentiellement en direction tangentielle entre un point d'introduction du couple de rotation et un point de sortie du couple de rotation et s'étend en oblique d'un angle d'inclinaison par rapport à un plan radial de l'embrayage à friction (10),
dans lequel le ressort de rappel (28) permet, dans l'état fermé de l'embrayage à friction (10), une force de pression plus élevée entre la partie d'entrée (14) et la partie de sortie (22) dans l'état usé de ladite au moins une garniture de friction (18) que dans l'état non usé de ladite au moins une garniture de friction (18).

2. Embrayage multidisque humide selon la revendication 1, **caractérisé en ce que** le ressort de rappel (28) procure lors de la transmission du couple de rotation, par l'allure tangentielle du ressort de rappel (28), une transmission de force en direction axiale qui varie sur la plage d'usure de ladite au moins une garniture de friction (18), dans lequel la transmission de force compense ou surcompense une variation d'une force de rappel variant sur la plage d'usure de ladite au moins une garniture de friction (18) en direction axiale dans la position initiale.

3. Embrayage multidisque humide selon une revendication 1 ou 2, **caractérisé en ce qu'**il est prévu une partie d'embrayage axialement fixe (12), en particulier un couvercle d'embrayage, dans lequel le ressort de rappel (28) est fixé directement ou indirectement à la partie d'embrayage (12) et à l'élément d'actionnement (24).

4. Embrayage multidisque humide selon la revendication 3, **caractérisé en ce qu'**il est prévu entre l'élément d'actionnement (24) et la partie de sortie (22) une plaque de pression (26) déplaçable axialement par l'élément d'actionnement (24) pour serrer la partie de sortie (22) entre la plaque de pression (26) et la partie d'entrée (14), dans lequel le ressort de rappel (28) est relié à la plaque de pression (26).

5. Embrayage multidisque humide selon l'une quelconque des revendications 1 à 4, **caractérisé en ce qu'**il est prévu un disque d'embrayage (30) pouvant être assemblé à l'arbre d'entrée de boîte de vitesses, dans lequel la partie de sortie (22) est déplaçable axialement par rapport au disque d'embrayage (30), dans lequel le ressort de rappel (28) est relié à la partie de sortie (22) et au disque d'embrayage (30).

6. Embrayage multidisque humide selon la revendication 5, **caractérisé en ce que** l'élément d'actionnement (24) agit sur la partie de sortie (22) sur un côté axial situé à l'opposé du disque d'embrayage (30).

7. Embrayage multidisque humide selon l'une quelconque des revendications 1 à 6, **caractérisé en ce que** dans la position initiale l'embrayage à friction (10) est ouvert.

8. Embrayage multidisque humide selon une revendication 1 ou 2, **caractérisé en ce qu'**il est prévu une partie d'embrayage axialement fixe (12), en particulier un couvercle d'embrayage, dans lequel la partie d'entrée (14) peut être déplacée axialement par rapport à la partie d'embrayage (12) par l'élément d'actionnement (24), dans lequel le ressort de rappel (28) est relié à la partie d'embrayage (12) et à la partie d'entrée (14), dans lequel en particulier le ressort de rappel (28) est relié à la partie d'embrayage (12) sur un côté axial de la partie d'embrayage (12) situé à l'opposé de la partie de sortie (22).

9. Embrayage multidisque humide selon la revendication 8, **caractérisé en ce que** la partie d'entrée (14) peut tourner de façon limitée par rapport à la partie d'embrayage (12).

10. Embrayage double pour l'accouplement d'un arbre de commande d'un moteur de véhicule automobile avec un premier arbre d'entrée de boîte de vitesses et/ou un second arbre d'entrée de boîte de vitesses avec un premier embrayage multidisque humide selon l'une quelconque des revendications 1 à 9 pour l'accouplement de l'arbre de commande avec le premier arbre d'entrée de boîte de vitesses et un second embrayage multidisque humide selon l'une quelconque des revendications 1 à 9 pour l'accouplement de l'arbre de commande avec le second arbre d'entrée de boîte de vitesses.
